# EUROPEAN PATENT APPLICATION

(11) **EP 3 139 652 A1**
(43) Date of publication of application: **08.03.2017**
(21) Application number: 16186446.7
(22) Date of filing: 30.08.2016
(51) Int. Cl.: H04W 12/10, G06F 21/60, H04L 29/06

(54) **METHOD OF MANAGING REGISTRY INFORMATION OF IMAGE FORMING APPARATUS REGISTERED TO CLOUD PRINTING SYSTEM, AND CLOUD PRINTING SYSTEM FOR PERFORMING THE SAME**

(30) Priority: 04.09.2015 KR 20150125600
(71) Applicant: Samsung Electronics Co., Ltd., Suwon-si, Gyeonggi-do 16677 (KR)
(72) Inventor: STEPANOV, Andrey, Seoul (KR); CHOI, Hwan-joon, Gyeonggi-do (KR)
(74) Representative: Taor, Simon Edward William

(57) **Abstract**

A method of managing registry information of an image forming apparatus registered to a cloud printing system is provided. The method includes receiving, from a local server of an in-house network system of an entity, a request to register the image forming apparatus with non-secure data of the registry information of the image forming apparatus, determining whether a license of the entity is valid, and storing the received non-secure data in a cloud area and completing registration of the image forming apparatus when the license is determined to be valid.

## Description

The present disclosure relates to a method of managing registry information of an image forming apparatus registered to a cloud printing system, and the cloud printing system performing the method.

Recent image forming apparatuses such as printers, scanners, photocopiers, and multifunctional devices are basically equipped with a communication function, and thus, a cloud printing service through communication with a server is available. In order to use the cloud printing service, printers are registered to the cloud printing system.

However, the registry information stored during registration of a printer may include data that a user does not want to disclose. The user may strongly wish to prevent the data from being stored in an external server that is providing the cloud printing service.

The above information is presented as background information only to assist with an understanding of the present disclosure. No determination has been made, and no assertion is made, as to whether any of the above might be applicable as prior art with regard to the present disclosure.

Aspects of the present disclosure are to address at least the above-mentioned problems and/or disadvantages and to provide at least the advantages described below. Accordingly, an aspect of the present disclosure is to provide a method and system for managing registry information of an image forming apparatus, which may strengthen security of data that a user does not want to disclose when the image forming apparatus is registered to a cloud printing system.

Additional aspects will be set forth in part in the description which follows and, in part, will be apparent from the description, or may be learned by practice of the presented embodiments.

In accordance with an aspect of the present disclosure, a method of managing registry information of an image forming apparatus registered to a cloud printing system is provided. The method includes receiving, from a local server of an in-house network system of an entity, a request to register the image forming apparatus with non-secure data of the registry information of the image forming apparatus, determining whether a license of the entity is valid, and storing the received non-secure data in a cloud area and completing registration of the image forming apparatus when the license is determined to be valid.

The registry information may include secure data and the non-secure data, and the secure data and the non-secure data each includes items that may be set or modified by a user.

When the registration of the image forming apparatus is completed, entire registry information including both the secure data and the non-secure data may be stored in a local area of the in-house network system.

When the registration of the image forming apparatus is completed, only the secure data may be stored in a local area of the in-house network system.

The method may further include receiving, from the local server, a request to search the image forming apparatus, and transmitting the non-secure data stored in the cloud area to the local server.

The method may further include receiving, from the local server, a request to synchronize the registry information with the non-secure data, updating the non-secure data stored in the cloud area by comparing the non-secure data stored in the cloud area with the non-secure data received from the local server, and transmitting the updated non-secure data stored in the cloud area to the local server.

In accordance with another aspect of the present disclosure, a method of managing registry information of an image forming apparatus registered to a cloud printing system is provided. The method includes receiving a request to register the image forming apparatus, transmitting only non-secure data among the registry information of the image forming apparatus to a cloud server and requesting registration, and storing the registry information in a local area when the cloud server permits the registration.

The registry information may include secure data and the non-secure data, and in which the secure data and the non-secure data each includes items that may be set or modified by a user.

In the storing of the registry information in the local area, entire registry information including both the secure data and the non-secure data may be stored in the local area.

In the storing of the registry information in the local area, only the secure data may be stored in the local area.

The method may further include requesting the non-secure data stored in a cloud area from the cloud server and receiving the non-secure data, when a request to search for the image forming apparatus is received from a mobile terminal, and combining the received non-secure data and the registry information stored in the local area and transmitting the combined data to the mobile terminal.

The method may further include transmitting the non-secure data among the registry information stored in the local area to the cloud server and requesting synchronization, receiving the non-secure data stored in the cloud area from the cloud server, and comparing the non-secure data received from the cloud server and the non-secure data stored in the local area and updating the non-secure data.

In accordance with another aspect of the present disclosure, a cloud printing system is provided. The cloud printing system includes a cloud server communicating with a local server of an in-house network system of an entity, and a cloud memory for storing data, in which the cloud server configured to receive a request to register an image forming apparatus with non-secure data among registry information of the image forming apparatus from the local server, determine whether a license of the entity is valid and, store the received non-secure data in the cloud memory and complete registration of the image forming apparatus when the license of the entity is determined to be valid.

The registry information may include secure data and the non-secure data, and in which the secure data and the non-secure data each includes items that may be set or modified by a user.

When the registration of the image forming apparatus is completed, the local server of the in-house network system may be configured to store entire registry information including both the secure data and the non-secure data in a local area of the in-house network system.

When the registration of the image forming apparatus is completed, the local server of the in-house network system may be configured to store only the secure data in the local area of the in-house network system.

When a request to search for the image forming apparatus is received from the local server, the cloud server may be further configured to transmit the non-secure data stored in the cloud memory to the local server.

When a request to synchronize the registry information with the non-secure data is received from the local server, the cloud server may be further configured to compare the non-secure data stored in the cloud memory and the non-secure data received from the local server, update the non-secure data stored in a cloud area, and transmit the updated non-secure data stored in the cloud memory to the local server.

Other aspects, advantages, and salient features of the disclosure will become apparent to those skilled in the art from the following detailed description, which, taken in conjunction with the annexed drawings, discloses various embodiments of the present disclosure.

The above and other aspects, features, and advantages of certain embodiments of the present disclosure will be more apparent from the following description taken in conjunction with the accompanying drawings, in which:
FIG. 1 illustrates a printing service based on a telephone number, according to an embodiment of the present disclosure;
FIG. 2 illustrates an image forming system providing a printing service based on a telephone number, according to an embodiment of the present disclosure;
FIG. 3 is a block diagram of a detailed structure of a user device of an image forming system, according to an embodiment of the present disclosure;
FIG. 4 is a block diagram of a detailed structure of a cloud server of an image forming system, according to an embodiment of the present disclosure;
FIG. 5 is a block diagram of a detailed structure of an image forming apparatus of an image forming system, according to an embodiment of the present disclosure;
FIGS. 6A and 6B illustrate a process of registering a telephone number of a mobile device of a second person to a cloud server by mapping the telephone number of the mobile device to an image forming apparatus, according to various embodiments of the present disclosure;
FIG. 6C illustrates a process of registering a telephone number of a mobile device of a second person to a cloud server by mapping the telephone number of the mobile device to an image forming apparatus, according to another embodiment of the present disclosure;
FIG. 6D illustrates a process of registering a telephone number of a mobile device of a second person to a cloud server by mapping the telephone number of the mobile device to an image forming apparatus, according to another embodiment of the present disclosure;
FIG. 6E illustrates a user interface (UI) screen of a printing application executed on a mobile device to register a telephone number of the mobile device to a cloud server, according to an embodiment of the present disclosure;
FIG. 7 illustrates an environment in which a corporation having an internal network system uses a cloud printing service through an external cloud system, according to an embodiment of the present disclosure;
FIGS. 8A to 8C illustrate examples of various embodiments in which registry information of an image forming apparatus is stored in a system in a process of registering the image forming apparatus, according to various embodiments of the present disclosure;
FIG. 8D illustrates a UI screen for classifying data items included in registry information into secure data and non-secure data, according to an embodiment of the present disclosure;
FIGS. 9 and 10 are flowcharts of processes of registering an image forming apparatus, according to various embodiments of the present disclosure;
FIGS. 11A and 11B illustrate examples of various embodiments in which registry information of an image forming apparatus is provided to a mobile terminal in a process of searching for the image forming apparatus, according to various embodiments of the present disclosure;
FIGS. 12 and 13 are flowcharts of examples of various embodiments in which registry information of an image forming apparatus is provided to a mobile terminal in a process of searching for the image forming apparatus, according to various embodiments of the present disclosure;
FIG. 14 illustrates a method of synchronizing registry information of an image forming apparatus registered to a cloud system, according to an embodiment of the present disclosure; and
FIG. 15 is a flowchart of a method of synchronizing registry information of an image forming apparatus registered to a cloud system, according to an embodiment of the present disclosure.

Throughout the drawings, it should be noted that like reference numbers are used to depict the same or similar elements, features, and structures.

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

As used herein, the term "and/or" includes any and all combinations of one or more of the associated listed items. Expressions such as "at least one of," when preceding a list of elements, modify the entire list of elements and do not modify the individual elements of the list.

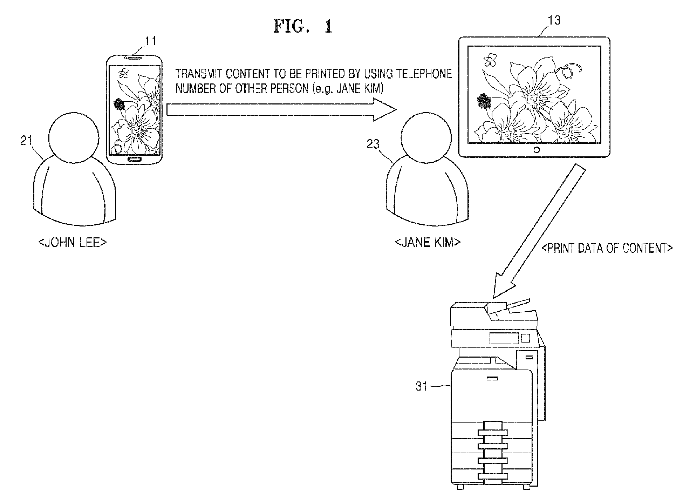

FIG. 1 illustrates a printing service based on a telephone number, according to an embodiment of the present disclosure.

Referring to FIG. 1, a first person 21, for example, "JOHN LEE", may transmit content such as images or documents stored in a mobile device 11 of the first person 21 to a mobile device 13 of a second person 23, for example, "JANE KIM", so that the second person 23 may print the content from an image forming apparatus 31.

In this state, the content stored in the mobile device 11 of the first person 21 is transmitted to the mobile device 13 of the second person 23 based on a telephone number of the mobile device 13 of the second person 23.

The mobile devices 11 and 13 described in the present embodiment may correspond to portable mobile devices or user devices having a mobile communication function such as smart phones, tablet devices, and personal digital assistants (PDAs), but the present disclosure is not limited thereto.

The portable mobile devices having a mobile communication function are capable of telephone communications by using well-known mobile communications technologies such as second generation (2G) mobile communications, third generation (3G) mobile communications, and fourth generation (4G) mobile communications.

In particular, each of the portable mobile devices such as smart phones, tablet devices, and personal digital assistants (PDAs) is assigned with a single unique telephone number by mobile communication companies, through which each portable mobile device is recognized.

Accordingly, each of the mobile device 11 of the first person 21 and the mobile device 13 of the second person 23 is assigned with a single telephone number. In other words, the telephone number may correspond to an intrinsic identification (ID) number of each mobile device 11 or 13.

Referring to FIG. 1, the first person 21 may transmit the content to the second person 23 by inputting the telephone number of the second person 23, who is a subject that prints the content, in the mobile device 11. Then, the second person 23 may print the transmitted content by using the image forming apparatus 31.

In the following description, an image forming system 1 providing a printing service based on a telephone number according to the present embodiment is described in detail.

In the present embodiment, types of the mobile devices 11 and 13 used by the first person 21 and the second person 23 are not limited, and any device that is a user device assigned with a telephone number may correspond to the mobile devices 11 and 13 of the present embodiment.

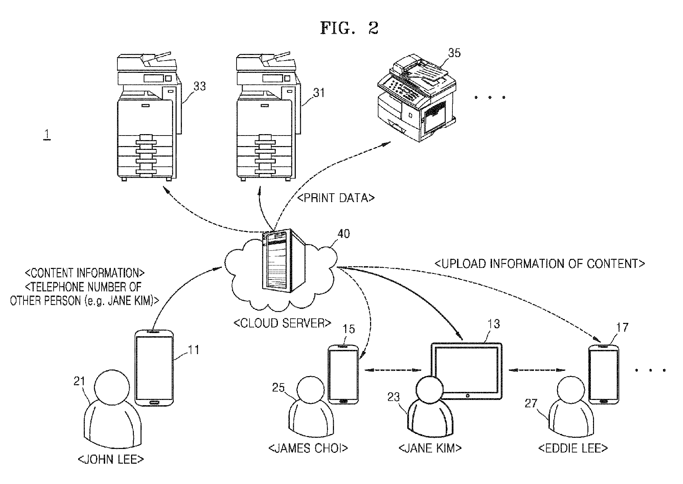

FIG. 2 illustrates an image forming system providing a printing service based on a telephone number according to an embodiment of the present disclosure.

Referring to FIG. 2, the image forming system 1 may include the mobile device 11 used by the first person 21, for example, "JOHN LEE", the mobile device 13 used by the second person 23, for example, "JANE KIM", a mobile device 15 used by a third person 25, for example, "JAMES CHOI", a mobile device 17 used by a fourth person 27, for example, "EDDIE LEE", a plurality of image forming apparatuses 31, 33, and 35, and a cloud server 40.

The number of the persons 21, 23, 25, and 27 included in the image forming system 1, and the number of the image forming apparatuses 31, 33, and 35, are arbitrarily defined for convenience of explanation, and the present disclosure is not limited thereto.

Also, in the description of the present embodiment, the names of the first person 21, the second person 23, the third person 25, and the fourth person 27, that is, "JOHN LEE", "JANE KIM", "JAMES CHOI", and "EDDIE LEE", are arbitrarily defined to help understanding of the present embodiment, and the present disclosure is not limited thereto.

The first person 21, for example, "JOHN LEE" may transmit print data of the content to at least one of the subjects who may print the content, for example, the second person 23, for example, "JANE KIM", by inputting a telephone number of the second person 23, on the mobile device 11. Also, the first person 21 may transmit the print data of the content to another person 25 or 27 by inputting a telephone number of the other person 25 or 27, on the mobile device 11.

For example, it is assumed that the first person 21 intends to transmit the print data of the content to the second person 23, on the mobile device 11.

The first person 21 may select content that is used or stored in the mobile device 11 and may input the telephone number of the second person 23, who is a subject that prints the content, on the mobile device 11.

The content selected on the mobile device 11 and the telephone number input by the first person 21 are transmitted to the cloud server 40.

The cloud server 40 corresponds to a server that manages the telephone number of the mobile devices 11, 13, 15, and 17. In detail, the cloud server 40 may be a server that manages information about a mapping relationship between the telephone number of the mobile devices 11, 13, 15, and 17 and the image forming apparatuses 31, 33, and 35, and/or information about a mapping relationship between the telephone number of the mobile devices 11, 13, 15, and 17 and the content transmitted from the mobile devices 11, 13, 15, and 17.

Also, the cloud server 40 may perform cloud rendering that renders or converts content in a non-print data format to content in a print data format.

When the telephone number of the second person 23 and the content information are transmitted from the mobile device 11 of the first person 21, the cloud server 40 renders or converts the transmitted content in a print data format and transmits print data of the content to the mobile device 13 of the second person 23 based on the telephone number of the second person 23 mapped to the content.

When the mobile device 13 of the second person 23 receives the content information from the cloud server 40, the print data of the content may be printed by at least one of the image forming apparatuses 31, 33, and 35 assigned by or mapped to the mobile device 13 of the second person 23.

In particular, when the second person 23 presets, on the mobile device 13, a direct printing mode or a direct printing function with respect to printing of the content, the print data of the content may be automatically printed by at least one of the image forming apparatuses 31, 33, and 35. The direct printing is described further below.

Also, when the second person 23 presets, on the mobile device 13, a pull printing mode or a pull printing function with respect to the printing of the content, the print data of the content is not automatically printed by at least one of the image forming apparatuses 31, 33, and 35, but is held off or stands by until a process request is input on the mobile device 13 by the second person 23. In other words, unlike the direct printing, the pull printing denotes that the mobile device 13 displays content information to the second person 23 and the content is processed when a process request of the second person 23 is input.

In this state, the second person 23 may input a print request to print the content by the at least one of the image forming apparatuses 31, 33, and 35 assigned by or mapped to the mobile device 13. Alternatively, the second person 23 may input a forwarding request to forward the content to another person 25 or 27. Alternatively, when the second person 23 does not wish to print the content, the second person 23 may input an erasure request to erase the content information stored in the cloud server 40. The above pull printing is described further below.

The pull printing and the direct printing are described in detail below.

The cloud server 40 may manage in advance information about the image forming apparatus 31 mapped to the mobile device 13 of the second person 23. Accordingly, the cloud server 40 transmits the print data of the content that has been transmitted to the mobile device 13 of the second person 23, to the image forming apparatus 31 mapped to the mobile device 13. Then, the image forming apparatus 31 prints the content based on the print data of the content so that the print request to print the content of the mobile device 11 of the first person 21 is completed.

In some embodiments, a case in which the first person 21 intends to transmit, on the mobile device 11, the print data of the content to the third person 25 or the fourth person 27 is performed in the same manner as above.

The cloud server 40 may manage only the image forming apparatus 31 mapped to the mobile device 13 of the second person 23. However, other image forming apparatus 33 or 35 may be further mapped.

If none of the image forming apparatuses 31, 33, and 35 is currently mapped to the mobile device 13 of the second person 23, registration information about a mapping relationship with the cloud server 40 may be updated by completing a registration process of the mobile devices 11, 13, 15, and 17 with respect to the image forming apparatuses 31, 33, and 35, which is described below.

The mobile devices 11, 13, 15, and 17, the image forming apparatuses 31, 33, and 35, and the cloud server 40, which exist in the image forming system 1, may be connected to one another via currently known many types of wired/wireless communication networks or mobile communications networks.

Referring to FIG. 2, the image forming system 1 may exchange content to be printed with only the telephone numbers of the mobile devices 11, 13, 15, and 17, and may print the content by using various image forming apparatuses 31, 33, and 35.

A printing platform of the image forming system 1 may be provided as an open application programming interface (API) for application developers or web page manufacturers. Accordingly, the application developers or web page manufacturers may freely develop printing applications executed in the mobile devices 11, 13, 15, and 17, and the image forming apparatuses 31, 33, and 35 by using the open API of the image forming system 1, based on the printing platform according to the present embodiment.

In the following description, the operations and functions of elements included in the image forming system 1 for providing a printing service based on a telephone number are described in detail.

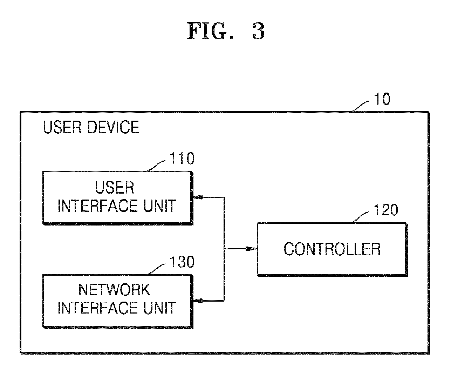

FIG. 3 is a block diagram of a detailed structure of a user device of an image forming system 1 according to an embodiment of the present disclosure.

Referring to FIG. 3, a user device 10 may correspond to at least one of the mobile devices 11, 13, 15, and 17 of the image forming system 1 of FIG. 2. In other words, the user device 10 may be either the mobile device 11 that is a sender's terminal for transmitting content to be printed or one of the mobile devices 13, 15, and 17 that are receiver's terminals for receiving the content to be printed. Alternatively, the user device 10 may be a computing device (not shown) capable of accessing an embedded web page provided by the image forming apparatus 31, 33, or 35.

In the following description of the mobile devices 11, 13, 15, and 17, each of the mobile devices 11, 13, 15, and 17 is described to include the structure of the user device 10 of FIG. 3.

The user device 10 may include a user interface (UI) unit 110, a controller 120, and a network interface unit 130. In FIG. 3, however, only hardware components related to the present embodiment are described to focus only on the characteristics of the present embodiment. However, one of ordinary skill in the art to which the present disclosure pertains may understand that other general-purposed hardware components in addition to the hardware components illustrated in FIG. 3 may be included in the present embodiment.

The UI unit 110, which is a hardware component including an input device or a display device, may display information to a user of the user device 10 or receive information from the user. The UI unit 110 may include individual devices for interfacing with the user, such as a display screen, a speaker, a keypad, a keyboard, and a mouse, and may further include a touch screen.

The user may, for example, select content to be transmitted from the user device 10 to the outside to be printed, or set printing options of the content, via the UI unit 110. Also, the user may input a telephone number that is a destination to be transmitted to the outside, via the UI unit 110.

The controller 120 is a hardware component for controlling the overall operation and function of the user device 10. In particular, the controller 120 may execute a printing application for providing a printing service based on a telephone number.

The controller 120 may be implemented by at least one of processors such as a central processing unit (CPU) and an application processor (AP).

The network interface unit 130, which is a hardware component for supporting a wired or wireless communication function, may support wireless communications such as WI-FI, WI-FI Direct, near field communication (NFC), and Bluetooth, wired communications such as Ethernet, or 2G, 3G, and 4G mobile communications.

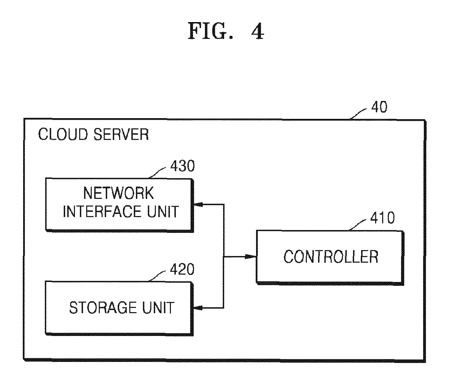

FIG. 4 is a block diagram of a detailed structure of a cloud server of an image forming system 1 according to an embodiment of the present disclosure.

Referring to FIG. 4, a cloud server 40 may correspond to the cloud server 40 of the image forming system 1 of FIG. 2. In the following description, the structure of the cloud server 40 is described with reference to FIG. 4.

The cloud server 40 may include a controller 410, a storage unit 420, and a network interface unit 430. In FIG. 4, however, only hardware components related to the present embodiment are described to focus only on the characteristics of the present embodiment. However, one of ordinary skill in the art to which the present disclosure pertains may understand that other general-purposed hardware components in addition to the hardware components illustrated in FIG. 4 may be included in the present embodiment.

The controller 120 is a hardware component for controlling the overall operation and function of the cloud server 40. The controller 120 may manage and update mapping information of telephone numbers of the individuals 11, 13, 15, and 17, or function as a renderer that performs rendering or converting content.

The controller 120 may be implemented by at least one of processors such as a CPU and an AP.

The storage unit 420 stores telephone number registration information such as a list of telephone numbers of the individuals 11, 13, 15, and 17, a list of contents mapped to the telephone numbers, and a list of the image forming apparatuses 31, 33, and 35 mapped to the telephone numbers.

Also, the storage unit 420 stores printing data of content that is rendered or converted in a printing data format.

The network interface unit 430, which is a hardware component for supporting a wired or wireless communication function, may support wireless communications such as WI-FI, WI-FI Direct, NFC, and Bluetooth, wired communications such as Ethernet, or 2G, 3G, and 4G mobile communications.

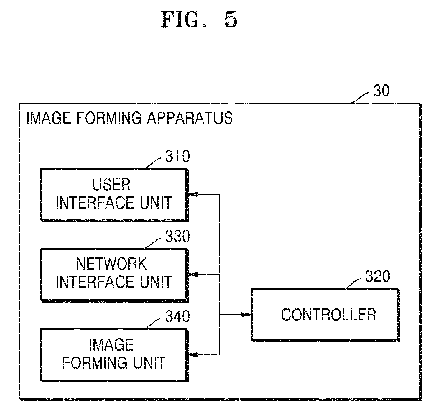

FIG. 5 is a block diagram of a detailed structure of an image forming apparatus of an image forming system 1 according to an embodiment of the present disclosure.

Referring to FIG. 5, an image forming apparatus 30 may correspond to at least one of the image forming apparatuses 31, 33, and 35 of the image forming system 1 of FIG. 2. In the following description of the image forming apparatuses 31, 33, and 35, the image forming apparatuses 31, 33, and 35 are described to include a structure of the image forming apparatus 30 of FIG. 5.

The image forming apparatus 30 may include a UI unit 310, a controller 320, a network interface unit 330, and an image forming unit 340. In FIG. 5, however, only hardware components related to the present embodiment are described to focus only on the characteristics of the present embodiment. However, one of ordinary skill in the art to which the present disclosure pertains may understand that other general-purposed hardware components in addition to the hardware components illustrated in FIG. 5 may be included in the present embodiment.

In the present embodiment, the printing application for providing a printing service based on a telephone number, which has a similar function to the printing service of the mobile device 11 of the first person 21 described above, may be previously installed on an operating system (OS) of the image forming apparatus 35. Alternatively, even when the printing application is not previously installed on the image forming apparatus 35, the printing application may be newly installed on the OS of the image forming apparatus 35 by any one of the persons 21, 23, 25, and 27 using the mobile devices 11, 13, 15, and 17 who wants to use the image forming apparatus 35.

The UI unit 310, which is a hardware component including an input device or a display device, may display information to a user of the image forming apparatus 30 or receive an input of information from the user. The UI unit 310 may include individual devices for interfacing with the user, such as a display screen, a speaker, a keypad, a keyboard, and a mouse, and may further include a touch screen.

The user may, for example, select content to be scanned by the image forming apparatus 30, or set printing options of the content, via the UI unit 310. Also, the user may input a telephone number that is a destination to be transmitted to the outside, via the UI unit 310.

The controller 320 is a hardware component for controlling the overall operation and function of the image forming apparatus 30. In particular, the controller 320 may execute the printing application for providing a printing service based on a telephone number. Also, the controller 320 may control a printing function, a copying function, and a scanning function of the image forming unit 340.

The controller 320 may be implemented by at least one of processors such as a CPU and an AP.

The network interface unit 330, which is a hardware component for supporting a wired or wireless communication function, may support wireless communications such as WI-FI, WI-FI Direct, NFC, and Bluetooth, wired communications such as Ethernet, or 2G, 3G, and 4G mobile communications.

The image forming unit 340 is a hardware component that performs printing and copying functions of content or a scanning function of a document.

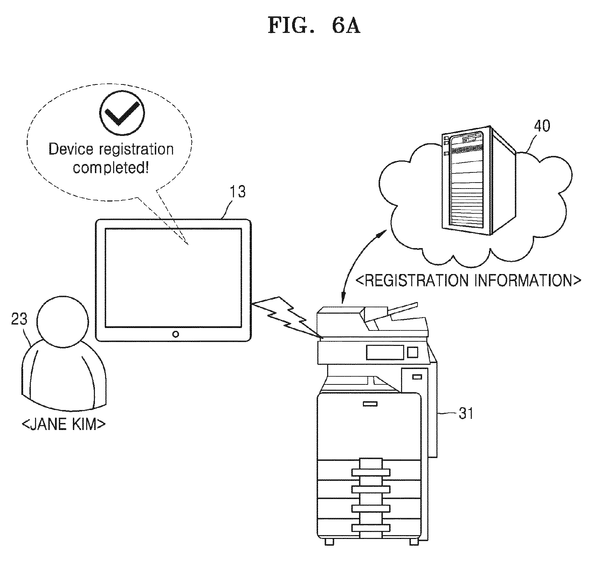

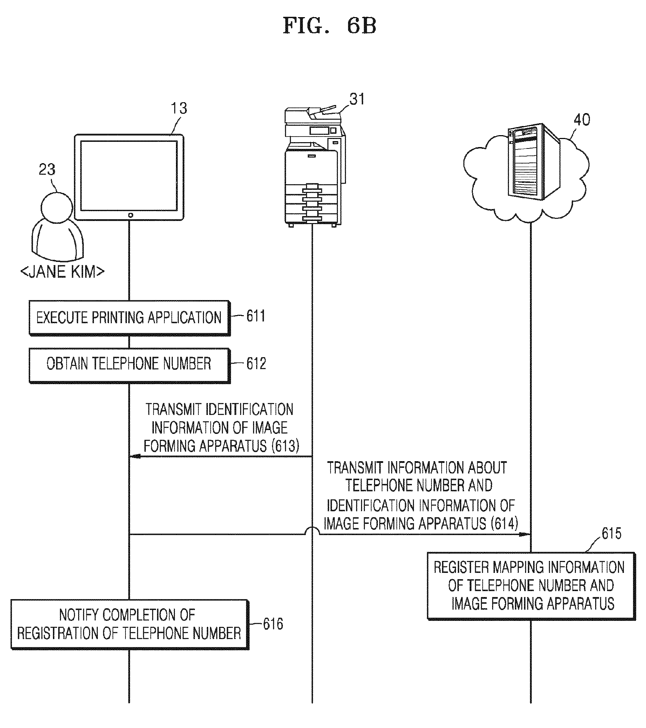

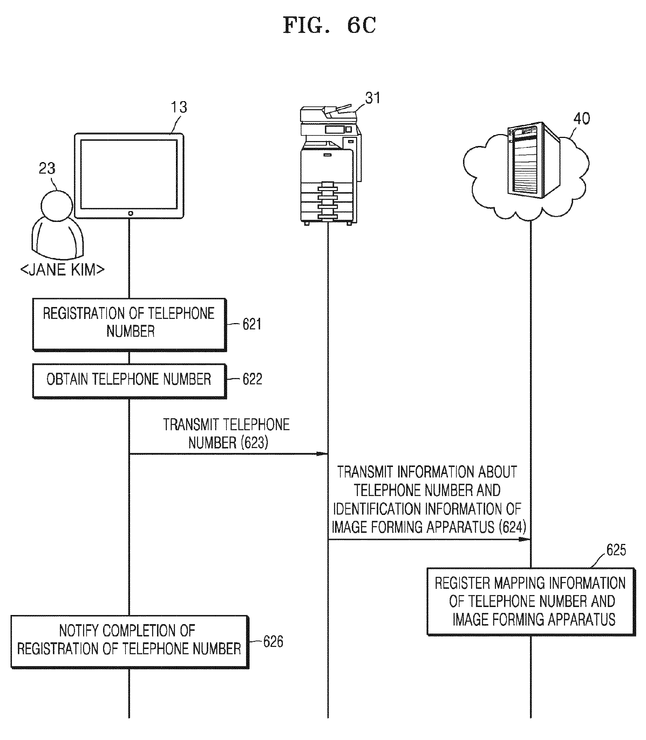

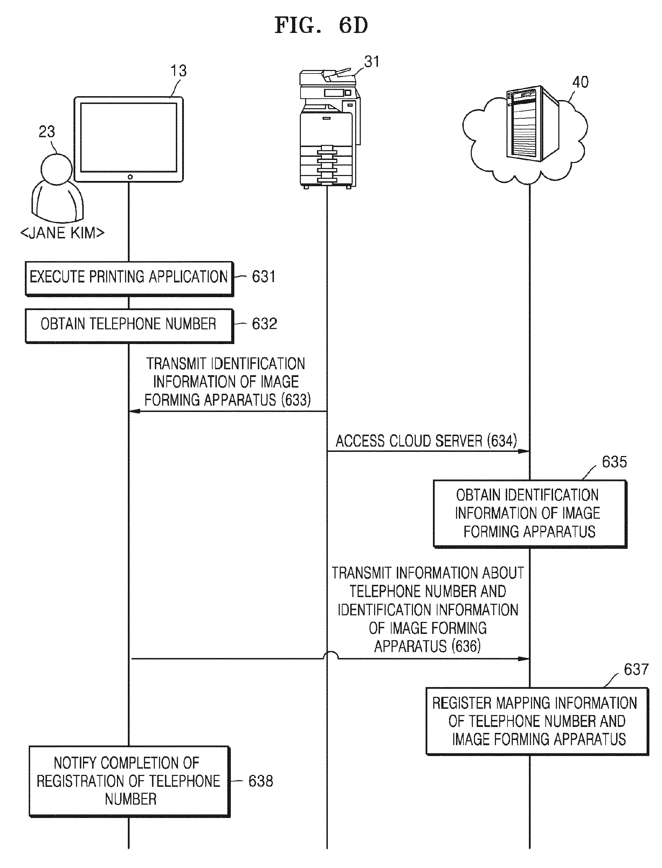

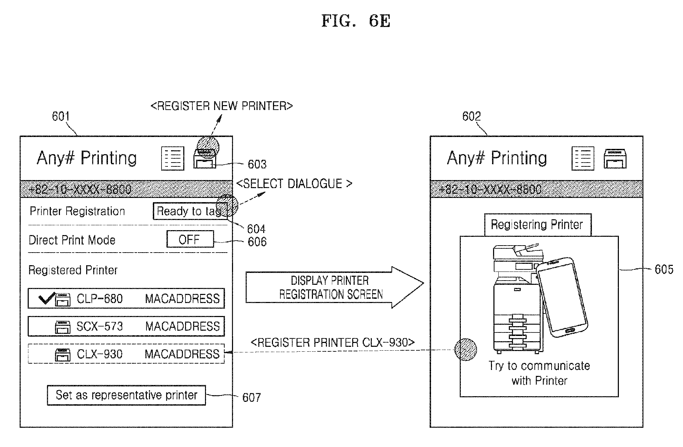

FIGS. 6A, 6B, 6C, 6D, and 6E illustrate various methods for registering image forming apparatuses 31, 33, and 35 to print received content, which is performed by mobile devices 13, 15, or 17 of a second person 23, for example, "JANE KIM", a third person 25, for example, "JAMES CHOI", or a fourth person 27, for example, "EDDIE LEE", corresponding to the receivers' terminals, in an image forming system 1 providing a printing service based on a telephone number according to various embodiments of the present disclosure.

Referring to FIGS. 6A, 6B, 6C, 6D, and 6E, although the mobile device 13 of the second person 23, for example, "JANE KIM", who is a receiver, is mainly discussed, the content of FIGS. 6A to 6E may be applied to the mobile device 15 or 17 of other person 25 or 27 in the same manner. Also, since the mobile device 11 of the first person 21, for example, "JOHN LEE", may correspond to a receiver terminal as necessary, the mobile device 11 of the first person 21 may perform the registration process in the methods to be described in FIGS. 6A to 6E in the same manner.

FIGS. 6A and 6B illustrate a process of registering a telephone number of a mobile device 13 of a second person 23 to a cloud server 40 by mapping the telephone number of the mobile device 13 to an image forming apparatus 31, according to various embodiments of the present disclosure.

Referring to FIGS. 6A and 6B, in operation 611, the controller 120 of the mobile device 13 executes a printing application.

In operation 612, the controller 120 of the mobile device 13 obtains a telephone number of the mobile device 13 through the executed printing application.

In operation 613, the network interface unit 130 of the mobile device 13 is wirelessly connected to the network interface unit 330 of the image forming apparatus 31, and the mobile device 13 receives ID information of the image forming apparatus 31 from the image forming apparatus 31.

The ID information of the image forming apparatus 31 may include information about a network address such as a media access control (MAC) address or internet protocol (IP) address of the image forming apparatus 31 and information about a serial number or product specifications of the image forming apparatus 31.

The network interface unit 130 of the mobile device 13 and the network interface unit 330 of the image forming apparatus 31 may be connected to each other via a wireless network such as WI-FI, WI-FI Direct, NFC, and Bluetooth.

For example, the operation 613 may be performed as the mobile device 13 activates an NFC function and is NFC-tagged to the image forming apparatus 31.

In operation 614, the network interface unit 130 of the mobile device 13 is wirelessly connected to the network interface unit 430 of the cloud server 40, and the mobile device 13 transmits the information about the telephone number of the mobile device 13 and the ID information of the image forming apparatus 31, as registration information of the mobile device 13, to the cloud server 40.

In operation 615, the controller 410 of the cloud server 40 maps the telephone number of the mobile device 13 and the ID information of the image forming apparatus 31 to each other, and stores mapping information on the storage unit 420 as the registration information of the mobile device 13.

In operation 616, the UI unit 110 of the mobile device 13 notifies that the registration of the telephone number of the mobile device 13 with respect to the image forming apparatus 31 has been completed.

FIG. 6C illustrates a process of registering a telephone number of a mobile device 13 of a second person 23 to a cloud server 40 by mapping the telephone number of the mobile device 13 to an image forming apparatus 31, according to another embodiment of the present disclosure.

Referring to FIGS. 6A and 6C, in operation 621, the controller 120 of the mobile device 13 executes a printing application.

In operation 622, the controller 120 of the mobile device 13 obtains a telephone number of the mobile device 13 through the executed printing application.

In operation 623, the network interface unit 130 of the mobile device 13 is wirelessly connected to the network interface unit 330 of the image forming apparatus 31, and the mobile device 13 transmits information about the obtained telephone number to the image forming apparatus 31.

For example, the operation 623 may be performed as the mobile device 13 activates an NFC function and is NFC-tagged to the image forming apparatus 31.

In operation 624, the network interface unit 330 of the image forming apparatus 31 is wirelessly connected to the network interface unit 430 of the cloud server 40, and the image forming apparatus 31 transmits the information about the telephone number obtained from the mobile device and ID information of the image forming apparatus 31, as the registration information of the mobile device 13, to the cloud server 40.

The image forming apparatus 31 may be connected to the cloud server 40 by using an extensible messaging and presence protocol (XMPP). However, the present disclosure is not limited thereto and the image forming apparatus 31 may be connected to the cloud server 40 by using other protocols.

In operation 625, the controller 410 of the cloud server 40 maps the telephone number of the mobile device 13 and the ID information of the image forming apparatus 31 to each other, and stores the mapping information on the storage unit 420 as registration information of the mobile device 13.

In operation 626, the UI unit 110 of the mobile device 13 notifies that the registration of the telephone number of the mobile device 13 with respect to the image forming apparatus 31 has been completed.

FIG. 6D illustrates a process of registering a telephone number of a mobile device 13 of a second person 23 to a cloud server 40 by mapping the telephone number of the mobile device 13 to an image forming apparatus 31, according to another embodiment of the present disclosure.

Referring to FIGS. 6A and 6D, in operation 631, the controller 120 of the mobile device 13 executes a printing application.

In operation 632, the controller 120 of the mobile device 13 obtains a telephone number of the mobile device 13 through the executed printing application.

In operation 633, the network interface unit 130 of the mobile device 13 is wirelessly connected to the network interface unit 330 of the image forming apparatus 31, and the mobile device 13 receives ID information of the image forming apparatus 31 from the image forming apparatus 31.

For example, the operation 633 may be performed as the mobile device 13 activates an NFC function and is NFC-tagged to the image forming apparatus 31.

In operation 634, the network interface unit 330 of the image forming apparatus 31 accesses the cloud server 40. The operation 634 may be performed by an access command of the mobile device 13. The image forming apparatus 31 may be connected to the cloud server 40 by using an XMPP. However, the present disclosure is not limited thereto and the image forming apparatus 31 may be connected to the cloud server 40 by using other protocols.

In operation 635, the controller 410 of the cloud server 40 obtains the ID information of the image forming apparatus 31.

In operation 636, the network interface unit 130 of the mobile device 13 is wirelessly connected to the network interface unit 430 of the cloud server 40, and the mobile device 13 transmits information about the telephone number of the mobile device 13 and the ID information of the image forming apparatus 31, as registration information of the mobile device 13, to the cloud server 40.

In operation 637, the controller 410 of the cloud server 40 maps the telephone number of the mobile device 13 and the ID information of the image forming apparatus 31 to each other and stores the mapping information on the storage unit 420 as the registration information of the mobile device 13.

In operation 638, the UI unit 110 of the mobile device 13 notifies that the registration of the telephone number of the mobile device 13 with respect to the image forming apparatus 31 has been completed.

FIG. 6E illustrates a UI screen of a printing application executed on a mobile device 13 to register a telephone number of the mobile device 13 to a cloud server 40, according to an embodiment of the present disclosure.

A printing application is previously installed on the mobile device 13.

When the second person 23 tries to register a telephone number of the mobile device 13 and the image forming apparatus 31 to the cloud server 40, the second person 23 executes the printing application on the mobile device 13.

While the printing application is executed, the second person 23 clicks a registration icon 603 to register a new printer and then a first screen 601 is displayed.

The first screen 601 may display an item to request registration of the image forming apparatus 31, an item to set a direct printing mode, and a list of image forming apparatuses registered to the telephone number of the mobile device 13.

When the second person 23 clicks a dialogue 604 of the item to request registration, a second screen 602 is displayed.

The second screen 602 displays an image 605 to guide registration of the image forming apparatus 31. When the second screen 602 is displayed, the second person 23 establishes communication between the mobile device 13 and the image forming apparatus 31 and thus registration of the image forming apparatus 31 may be completed. The communication between the mobile device 13 and the image forming apparatus 31 may be established as the mobile device 13 is NFC-tagged to the image forming apparatus 31. Also, the communication between the mobile device 13 and the image forming apparatus 31 may be established by other wireless communication methods such as WI-FI or WI-FI Direct.

In other words, the mobile device 13 may register information about the telephone number of the mobile device 13 to the cloud server 40 through the first screen 601 and the second screen 602 of the previously installed printing application. However, screen configurations of the first screen 601 and the second screen 602 of the printing application may vary, and the screen configuration of the printing application is not limited to the present embodiment.

The mobile device 13 may activate or deactivate the direct printing mode through an item 606 to set the direct printing mode of the printing application.

When the direct printing function is activated, the second person 23 selects any one of the image forming apparatuses in the list, that is, the image forming apparatus 31, for example, "CLP-680", and then clicks a set button 607, thereby setting the image forming apparatus 31, for example, "CLP-680", to perform the direct printing mode.

The registration information and direct printing mode information processed by the printing application of the mobile device 13 may be transmitted to the cloud server 40 and stored thereon.

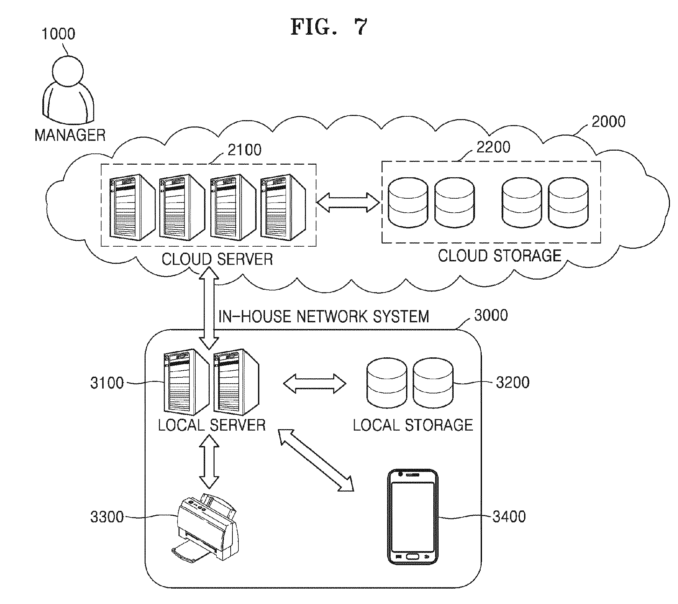

In the following description, a method of managing registry information of an image forming apparatus registered to a printing service based on a telephone number, that is, a cloud printing service is described with reference to FIGS. 7, 8A to 8D, 9, 10, 11A and 11B, and 12 to 15.

As described above with reference to FIGS. 6A to 6E, a user may register an image forming apparatus to correspond to a telephone number of a user's mobile terminal to a server providing a cloud printing service. However, when a corporation equipped with an independent network system uses a cloud printing service provided by an external cloud server, it may be a problem how to manage registry of a registered image forming apparatus, that is, where to store and how to manage registry information of the image forming apparatus.

When the registry information of the image forming apparatus is all stored in a local area in the corporation, not in a cloud area, it is difficult to monitor the image forming apparatus in the cloud area. In contrast, when the registry information of the image forming apparatus is all stored in the cloud area, it may be a problem in a viewpoint of a user that even information that the user does not want to be disclosed is stored in the cloud area.

Accordingly, in the following various embodiments, a method of dividing the registry information of the image forming apparatus into secure data that needs security non-secure data that does not need security and storing the secure data only in a local area of a network system in a corporation to strengthen security is provided.

FIG. 7 illustrates an environment in which a corporation having an internal network system uses a cloud printing service through an external cloud system, according to an embodiment of the present disclosure.

Referring to FIG. 7, a cloud system 2000 may include a cloud server 2100, and a cloud storage 2200. A manager 1000 manages the cloud system 2000. An in-house network system 3000 may include a local server 3100, a local storage 3200, an image forming apparatus 3300, and a mobile terminal 3400. The cloud server 2100 and the cloud storage 2200 may be configured to be physically one apparatus, or each of the cloud server 2100 and the cloud storage 2200 may be configured to be two or more apparatuses. Likewise, the local server 3100 and the local storage 3200 may be configured to be physically one apparatus, or each of the local server 3100 and the local storage 3200 may be configured to be two or more apparatuses.

An in-house user may use a cloud printing service provided by the cloud system 2000 by accessing the local server 3100 of the in-house network system 3000 through the mobile terminal 3400. However, in order to use the cloud printing service, as described above, the image forming apparatus 3300 is registered to the cloud system 2000.

When the image forming apparatus 3300 is registered to the cloud system 2000, registry information of the image forming apparatus 3300 is stored in at least one of the cloud system 2000 and the in-house network system 3000. In the following various embodiments, among the registry information of the image forming apparatus 3300, a data item needing security is set to be secure data, and the secure data is stored in the local storage 3200 only and is not stored in the cloud storage 2200.

The registry information may be called or modified in a service use process after the registration of the image forming apparatus 3300. Accordingly, in the following description, methods of storing and managing the registry information of the image forming apparatus 3300 in each of processes of registering and searching of the image forming apparatus 3300 and synchronizing the registry information of the image forming apparatus 3300 are described.

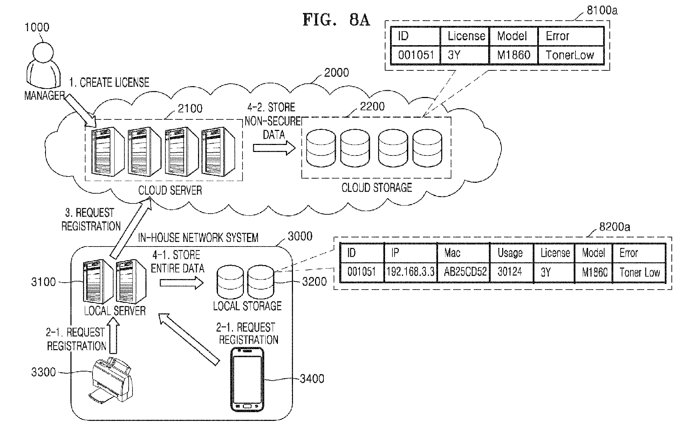

First, referring to FIGS. 8A, 8B, 8C, 8D, 9, and 10, a method of managing registry information in a process of registering the image forming apparatus 3300 is described.

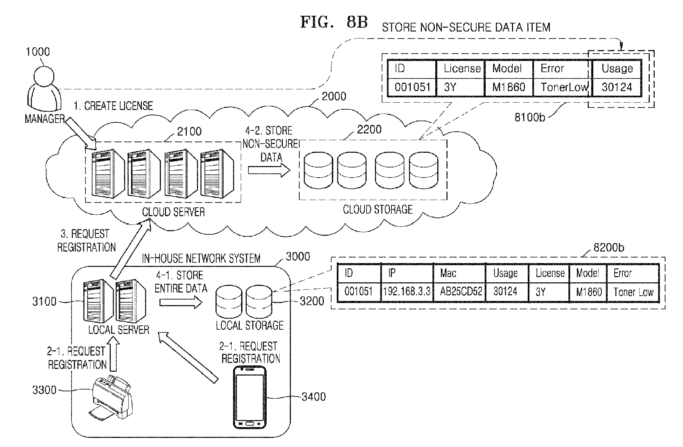

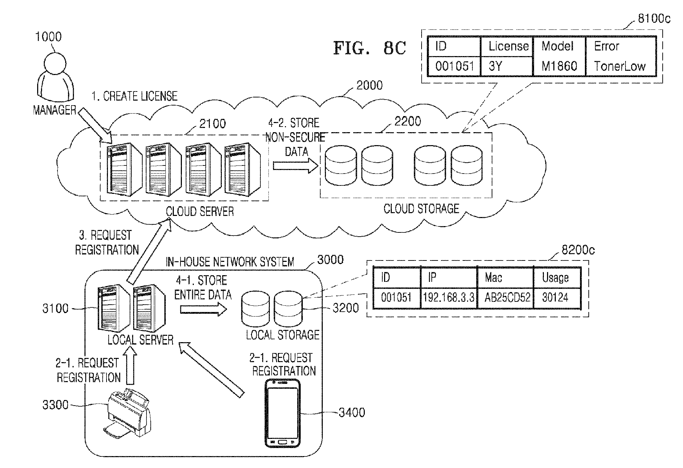

FIGS. 8A, 8B, and 8C illustrate examples of various embodiments in which registry information of an image forming apparatus 3300 is stored in a system in a process of registering the image forming apparatus 3300 according to various embodiments of the present disclosure.

Referring to FIG. 8A, the manager 1000 establishes a website for providing a cloud printing service to a corporation, creates a license for the corporation, and stores the license on the cloud system 2000 (1. Create License). During the creation of a license, the manager 1000 may set a validation period of a license, the number of registrable image forming apparatuses, various policies related to use of services, and configuration values, and store them on the cloud system 2000.

The in-house user may request the local server 3100 to register the image forming apparatus 3300 through a mobile application executed on the mobile terminal 3400 and supporting the cloud printing service. When the mobile terminal 3400 request the local server 3100 for registration of the image forming apparatus 3300 by transmitting ID information of the image forming apparatus 3300, the local server 3100 may search for the image forming apparatus 3300 corresponding to the received ID information and obtain device information including an IP address, a MAC address, and a model name, from the image forming apparatus 3300 that is found. Alternatively, the mobile terminal 3400 may obtain the device information from the image forming apparatus 3300 and request the registration of image forming apparatus 3300 by transmitting the obtained device information to the local server 3100 (2-1. Request Registration).

Also, the in-house user may request the registration of the image forming apparatus 3300 directly from an operation panel provided on the image forming apparatus 3300. In this case, an embedded agent included in the image forming apparatus 3300 may request the registration by transmitting the device information to the local server 3100 (2-2. Request Registration).

The local server 3100 receives the registration request from the mobile terminal 3400 or the image forming apparatus 3300 transmits the registration request to the cloud server 2100 (3. Request Registration). When receiving the request to register the image forming apparatus 3300 from the local server 3100, the cloud server 2100 checks whether the license of the corporation including the local server 3100 is valid and, if the license is valid, the cloud server 2100 performs the registration of the image forming apparatus 3300.

When the registration of the image forming apparatus 3300 is performed, the registry information of the image forming apparatus 3300 is stored in at least one of the cloud system 2000 and the in-house network system 3000.

The registry information of the image forming apparatus 3300 may include device information of the image forming apparatus 3300, for example, an IP address, a MAC address, and a model name, and information about the license issued for the corporation. The registry information may additionally include information about the number of uses of the image forming apparatus 3300 and an error generated in the image forming apparatus 3300. In addition, various pieces of information needing for registration and management of the image forming apparatus 3300 may be further included.

The registry information of the image forming apparatus 3300 may be divided into secure data and non-secure data. The secure data denotes data needing security, which the user does not want to be disclosed. The non-secure data denotes data other than the secure data, needing no security.

Among the data items included in the registry information, items included in each of the secure data and the non-secure data may be set by the in-house user or the manager 1000 of the cloud system 2000. Accordingly, the in-house user may set a data item that the in-house user does not want to be disclosed, as the secure data, if necessary.

A position where the registry information is stored may vary according to the data item, that is, whether the data item is included in the secure data or the non-secure data. In the embodiment in FIG. 8A, entire registry information including the secure data and the non-secure data is stored in the local storage 3200 of the in-house network system 3000, whereas only the non-secure data is stored in the cloud storage 2200 of the cloud system 2000.

In detail, when the cloud server 2100 determines that the license of the corporation including the local server 3100 is valid, the cloud server 2100 transmits the data item of the registry information, for example, a license validation period, possessed by the cloud system 2000, to the local server 3100. The local server 3100 creates entire registry information 8200a by combining the data item of the registry information received from the cloud server 2100 and the data item, for example, an IP address, a MAC address, and the number of uses, of the registry information possessed by the in-house network system 3000. The entire registry information 8200a that is created is stored in the local storage 3200 to correspond to a particular ID "001051" (4-1. Store Entire Data). The ID "001051" may be assigned by the cloud server 2100 to the corporation or a particular user in the corporation during creation of a license to the corporation, or assigned to the image forming apparatus 3300 that is registered.

When the registration of the image forming apparatus 3300 is performed, the local server 3100 transmits data items, for example, a model name and an error state, included in the non-secure data among the data items of the registry information possessed by the in-house network system 3000, to the cloud server 2100. The cloud server 2100 stores non-secure data 8100a in the cloud storage 2200 to correspond to the ID "001051" (4-2. Store Non-Secure Data).

As a result, the entire registry information 8200a including the secure data and the non-secure data is stored in the local storage 3200, whereas only the non-secure data 8100a is stored in the cloud storage 2200. Accordingly, the data items, for example, an IP address, a MAC address, and the number of uses, included in the secure data of the registry information are not disclosed outside the in-house network system 3000.

Although FIG. 8A illustrates that, when the local server 3100 transmits a registration request to the cloud server 2100 (3. Request Registration) and then registration is permitted, the registry information is stored in each of the cloud storage 2200 and the local storage 3200 (4-1. Store Entire Data/4-2. Store Non-Secure Data), the above sequence may be partially modified.

For example, when the request to register the image forming apparatus 3300 is received, the local server 3100 may first store secure data of the registry information in the local storage 3200 and transmit non-secure data to the cloud server 2100, requesting registration. When the registration is permitted, the cloud server 2100 may store the non-secure data in the cloud storage 2200 and the local server 3100 may additionally store registry information received from the cloud server 2100 in the local storage 3200.

Although FIG. 8A illustrates that the entire registry information 8200a includes an IP address "192.168.3.3", a MAC address "AB25CD52", the number of uses "30124", a model name "M1860", an error state "Toner Low", and a license validation period "3Y" of the image forming apparatus 3300, the present disclosure is not limited thereto and the registry information 8200a may further include various pieces of information needed for the registration and management of the image forming apparatus 3300. Also, the items that are included in the secure data, for example, an IP address, a MAC address, and the number of uses, and in the non-secure data, for example, a license validation period, a model name, and an error state, may be variously modified according to user's settings.

FIGS. 8B and 8C illustrate examples of various embodiments in which, while the registration process is the same as that of FIG. 8A, only the data items stored in each of the cloud storage 2200 and the local storage 3200 are different from each other. Accordingly, the registration process of the image forming apparatus 3300 described in FIG. 8A is referred to in the present embodiment.

FIG. 8B illustrates an example of an embodiment in which items to be included in the secure data and the non-secure data are modified. As described above, the manager 1000 of the cloud system 2000 may set and modify the data item to be included in the secure data of the registry information. Referring to FIG. 8B, the manager 1000 excludes the number of uses "30124" of the image forming apparatus 3300 from the secure data item and adds the item to the non-secure data item. Accordingly, non-secure data 8100b stored in the cloud storage 2200 additionally includes the number of uses in a license validation period, a model name, and an error state.

In FIGS. 8A and 8B, while the entire registry information 8200a or 8200b is stored in the local storage 3200, the non-secure data 8100a or 8100b is separately stored in the cloud storage 2200. This is because the cloud system 2000 may monitor a state of the registration and management of the image forming apparatus 3300. Accordingly, the in-house user or the manager 1000 of the cloud system 2000 may set items to be included in the secure data and the non-secure data of the entire registry information 8200a or 8200b considering data items needed for management in view of corporation's security demands and the cloud system 2000, and may modify the set items according to a change in a situation and necessity.

FIG. 8C illustrates an example of an embodiment in which the data item to be included in the local storage 3200 is modified. Referring to FIG. 8C, only secure data 8200c, not the entire registry information 8200a or 8200b, is stored in the local storage 3200, and only non-secure data 8100c is stored in the cloud storage 2200. The other registration process of the image forming apparatus 3300 is the same as that in the embodiment of FIG. 8A. Accordingly, the registration process of the image forming apparatus 3300 described above in FIG. 8A is referred to in the present embodiment.

As described above, the manager 1000 who manages the cloud system 2000 may set the data items included in each of the secure data and the non-secure data among the data items included in the registry information of the image forming apparatus 3300.

For example, the manager 1000 may access a UI screen of a web page for classifying data items and select data items to be set to the secure data or the non-secure data among the data items displayed on the UI screen.

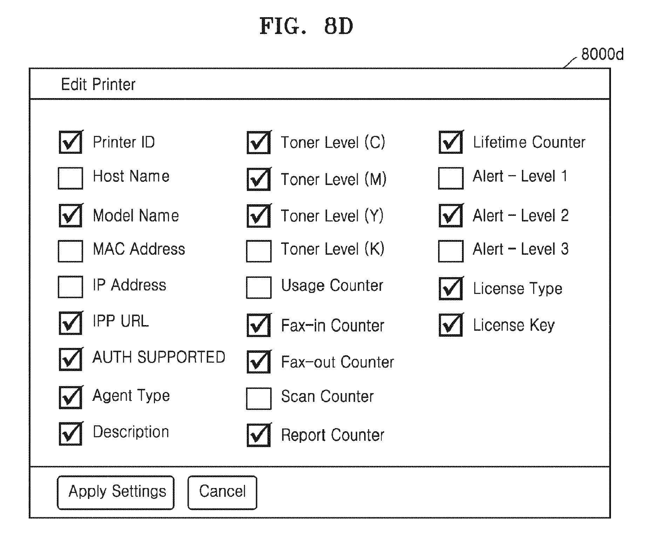

FIG. 8D illustrates a UI screen for classifying data items included in registry into secure data and non-secure data according to an embodiment of the present disclosure. The data items selected in a UI screen 8000d of FIG. 8D are set to the non-secure data.

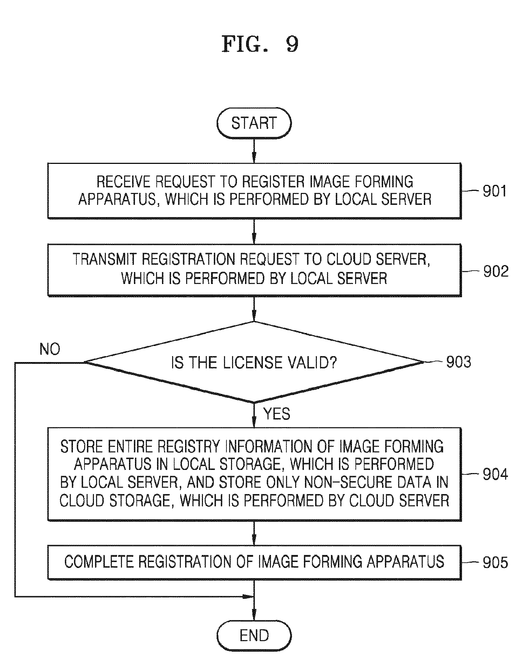

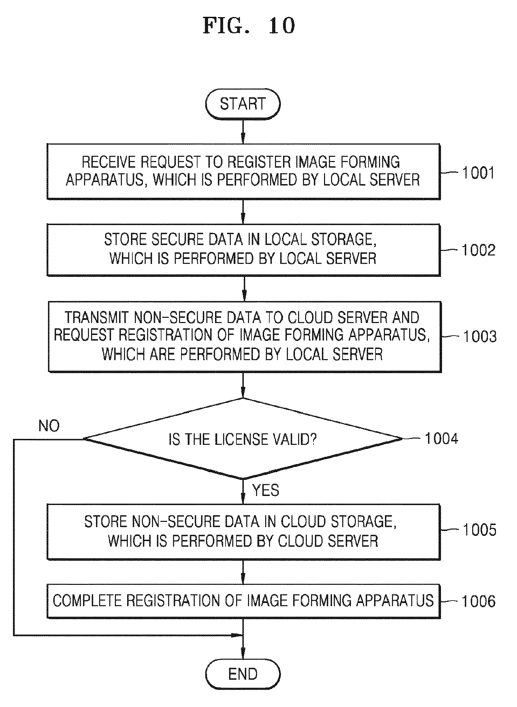

FIGS. 9 and 10 are flowcharts of processes of registering an image forming apparatus according to various embodiments of the present disclosure.

Referring to FIG. 9, in operation 901, a local server of an in-house network system receives a request to register an image forming apparatus. In this state, the local server receives device information of the image forming apparatus. The local server may receive the device information with the registration requests directly from the image forming apparatus. Alternatively, the local server may receive the registration request with ID information of the image forming apparatus from a mobile terminal and obtain the device information by accessing the image forming apparatus by using the received ID information. Alternatively, the local server may receive the registration request with the device information of the image forming apparatus from the mobile terminal.

In operation 902, the local server transmits the request to register the image forming apparatus to a cloud server. The local server may request registration of the image forming apparatus while transmitting non-secure data among the device information of the image forming apparatus to the cloud server.

In operation 903, the cloud server determines whether a corporation having the local server that transmitted the registration request has a valid license. A manager of the cloud system may previously create a license for a corporation and store the license in the cloud system.

As a result of the determination, if the corporation has a valid license, operation 904 is performed and thus the local server stores the entire registry information of the image forming apparatus in the local storage and the cloud server stores only the non-secure data of the registry information in the cloud storage. Data items included in each of the secure data and the non-secure data of the registry information may be previously set by the manager of the cloud system or the in-house user.

As a result of the determination, if the corporation does not have a valid license, the registration of the image forming apparatus is not performed and the process is terminated.

In operation 905, the cloud system completes the registration of the image forming apparatus.

Referring to FIG. 10, in operation 1001, the local server of the in-house network system receives the request to register the image forming apparatus. The local server receives the device information of the image forming apparatus. The local server may receive the device information with the registration request directly from the image forming apparatus. Alternatively, the local server may receive the registration request with the ID information of the image forming apparatus from the mobile terminal and access the image forming apparatus by using the received ID information, thereby obtaining the device information. Alternatively, the local server may receive the registration request with the device information of the image forming apparatus from the mobile terminal.

In operation 1002, the local server stores the secure data in the local storage. In other words, the local server stores the secure data among the device information of the image forming apparatus in the local storage. The in-house user or the manager of the cloud system may previously set data item to be included in the secure data.

In operation 1003, the local server transmits the non-secure data to the cloud server and requests registration of the image forming apparatus.

In operation 1004, the cloud server determines whether the corporation having the local server that transmitted the registration request has a valid license. The manager of the cloud system may previously create a license for the corporation and store the license in the cloud system.

As a result of the determination, if the corporation has a valid license, operation 1005 is performed and thus the cloud server stores the non-secure data in the cloud storage.

As a result of the determination, if the corporation does not have a valid license, the registration of the image forming apparatus is not performed and the process is terminated.

In operation 1006, the cloud system completes the registration of the image forming apparatus.

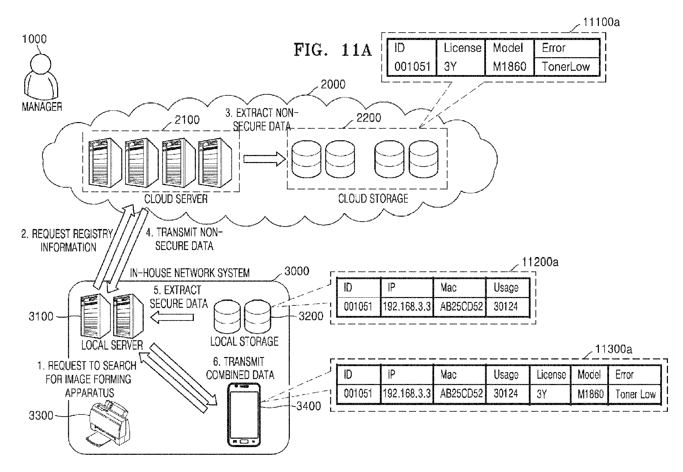

A method of managing registry information in a process of searching for the image forming apparatus 3300 is described with reference to FIGS. 11A and 11B, 12, and 13.

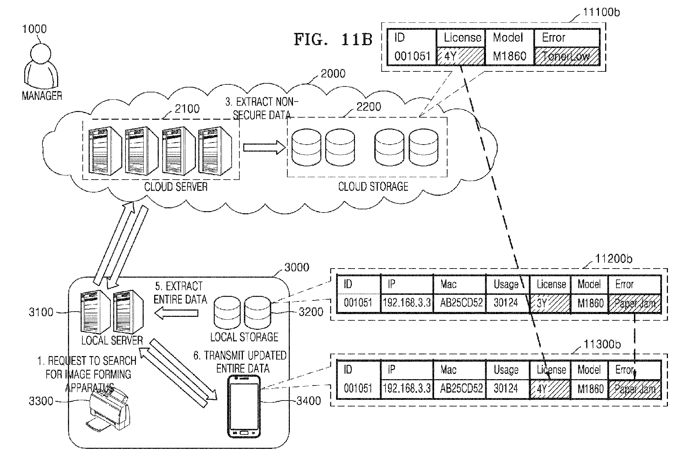

FIGS. 11A and 11B illustrate examples of various embodiments in which registry information of an image forming apparatus 3300 is provided to a mobile terminal 3400 in a process of searching for an image forming apparatus 3300 according to various embodiments of the present disclosure. In particular, the various embodiments of FIGS. 11A and 11B are different in that, in the embodiment of FIG. 11A, only the secure data is stored in the local storage 3200 and, in the embodiment of FIG. 11B, the entire registry information is stored in the local storage 3200.

Referring to FIG. 11A, the in-house user may request the local server 3100 to search for the image forming apparatus 3300, through a mobile application executed on the mobile terminal 3400 and supporting a cloud printing service (1. Request To Search For Image Forming Apparatus).

When receiving a request to search for the image forming apparatus 3300 from the mobile terminal 3400, the local server 3100 requests registry information of the image forming apparatus 3300 from the cloud server 2100 (2. Request Registry Information).

The cloud server 2100 extracts the non-secure data stored in the cloud storage 2200 according to the request of the local server 3100 (3. Extract Non-Secure Data). In other words, the cloud server 2100 extracts non-secure data 11100a corresponding to an ID "001051" from the cloud storage 2200.

The cloud server 2100 transmits the extracted non-secure data to the local server 3100 (4. Transmit Non-Secure Data). Since only secure data 11200a is stored in the local storage 3200, the non-secure data 11100a is needed to provide the entire registry information of the image forming apparatus 3300 to the mobile terminal 3400.

The local server 3100 extracts the secure data 11200a corresponding to the ID "001051" from the local storage 3200 (5. Extract Secure Data).

The local server 3100 creates entire registry information 11300a by combining the non-secure data 11100a received from the cloud server 2100 and the secure data 11200a extracted from the local storage 3200. Next, the local server 3100 transmits the entire registry information 11300a that is created, to the mobile terminal 3400.

When FIG. 11B is compared with FIG. 11A, only the secure data 11200a is stored in the local storage 3200 in FIG. 11A, whereas entire registry information 11200b including both of the secure data and the non-secure data is stored in the local storage 3200 in FIG. 11B.

In other words, in FIG. 11B, the non-secure data, for example, a license, a model name, and an error state, is stored in both of the cloud storage 2200 and the local storage 3200. Accordingly, when the non-secure data items are partially modified, only any one of the cloud storage 2200 and the local storage 3200 may be updated.

To address the above information mismatch, in the embodiment of FIG. 11B, when combining non-secure data 11100b received from the cloud server 2100 and entire registry information 11200b extracted from the local storage 3200, if there is a difference in some of the non-secure data items between the non-secure data 11100b and the entire registry information 11200b, the local server 3100 takes the most recent data.

Referring to FIG. 11B, for a license validation period of the non-secure data items, the non-secure data 11100b extracted from the cloud storage 2200 indicates four years "4Y", whereas the entire registry information 11200b extracted from the local storage 3200 indicates three years "3Y". Accordingly, the data between the non-secure data 11100b and the entire registry information 11200b are not matched with each other.

When the manager 1000 of the cloud system 2000 modifies the license validation period, the modified license validation period is first stored in the cloud storage 2200. In other words, the license validation period "4Y" stored in the non-secure data 11100b extracted from the cloud storage 2200 is the most recent data.

For the error state of the non-secure data, the non-secure data 11100b extracted from the cloud storage 2200 indicates an error state "Toner Low", whereas the entire registry information 11200b extracted from the local storage 3200 indicates an error state "Paper Jam". Accordingly, the data between the non-secure data 11100b and the entire registry information 11200b are not matched with each other.

When an error is generated in the image forming apparatus 3300, the generated error is first stored in the in-house network system 3000. In other words, the error state "Paper Jam" stored in the entire registry information 11200b extracted from the local storage 3200 is the most recent data.

Accordingly, when combining the non-secure data 11100b received from the cloud server 2100 and the entire registry information 11200b extracted from the local storage 3200, the local server 3100 creates entire registry information 11300b by taking the most recent data for each of the license validation period and the error state, and transmits the entire registry information 11300b to the mobile terminal 3400.

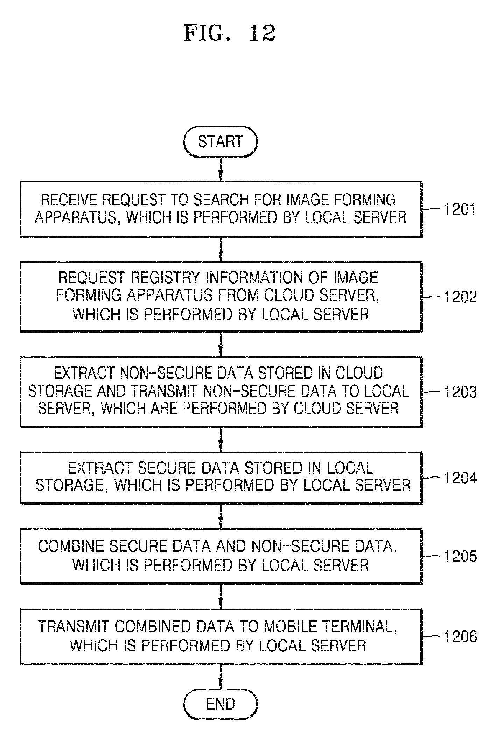

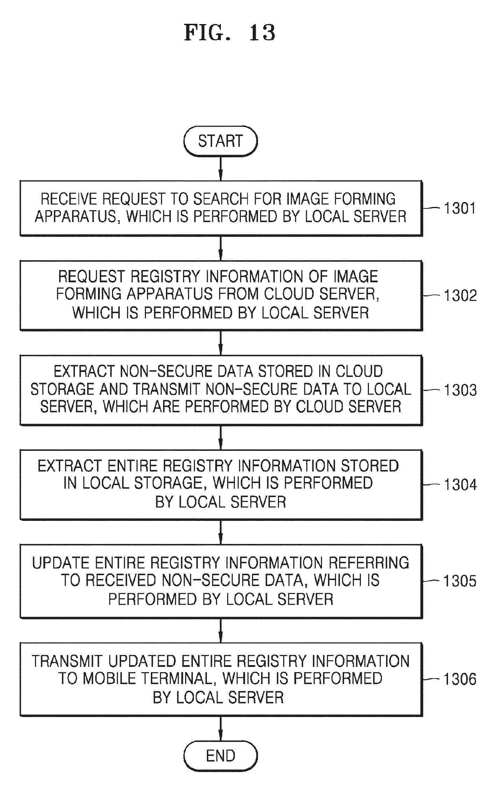

FIGS. 12 and 13 are flowcharts of examples of various embodiments in which registry information of an image forming apparatus is provided to a mobile terminal in a process of searching for the image forming apparatus, according to various embodiments of the present disclosure.

Referring to FIG. 12, in operation 1201, the local server requests to search for the image forming apparatus. In detail, when the user requests to search for the image forming apparatus through the mobile application executed on the mobile terminal, the mobile terminal transmits the request of searching for the image forming apparatus to the local server.

In operation 1202, the local server requests registry information of the image forming apparatus from the cloud server. The registry information of the image forming apparatus is separately stored in the cloud system and the in-house network system. In particular, the non-secure data of the registry information is stored in the cloud system. Accordingly, the local server requests the non-secure data from cloud server.

In operation 1203, the cloud server extracts the non-secure data stored in the cloud storage and transmits the extracted non-secure data to the local server.

In operation 1204, the local server extracts the secure data stored in the local storage.

In operation 1205, the local server creates the entire registry information by combining the non-secure data received from the cloud server and the secure data extracted from the local storage.

In operation 1206, the local server transmits the combined data, that is, the entire registry information, to the mobile terminal.

Referring to FIG. 13, in operation 1301, the local server receives a request to search the image forming apparatus. In detail, when the user requests to search for the image forming apparatus through the mobile application executed on the mobile terminal, the mobile terminal transmits the request to search the image forming apparatus to the local server.

In operation 1302, the local server requests the registry information of the image forming apparatus from the cloud server. The registry information of the image forming apparatus is separately stored in the cloud system and the in-house network system. In particular, the non-secure data of the registry information is stored in the cloud system. Accordingly, the local server requests the non-secure data from the cloud server.

In operation 1303, the cloud server extracts the non-secure data stored in the cloud storage and transmits the extracted non-secure data to the local server.

In operation 1304, the local server extracts the entire registry information stored in the local storage.

In operation 1305, referring to the non-secure data received from the cloud server, the local server updates the entire registry information extracted from the local storage. When the non-secure data items are partially modified after the registry information of the image forming apparatus is initially registered, only one of the cloud storage and the local storage is updated so that data may be mismatched with each other. Accordingly, the local server compares the non-secure data received from the cloud server with the entire registry information extracted from the local storage, and takes the most recent data for the item of mismatched data, thereby updating the entire registry information.

In operation 1306, the local server transmits the updated entire registry information to the mobile terminal.

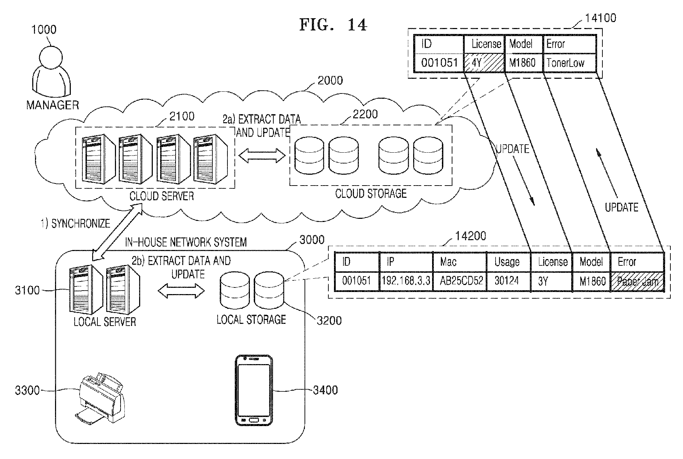

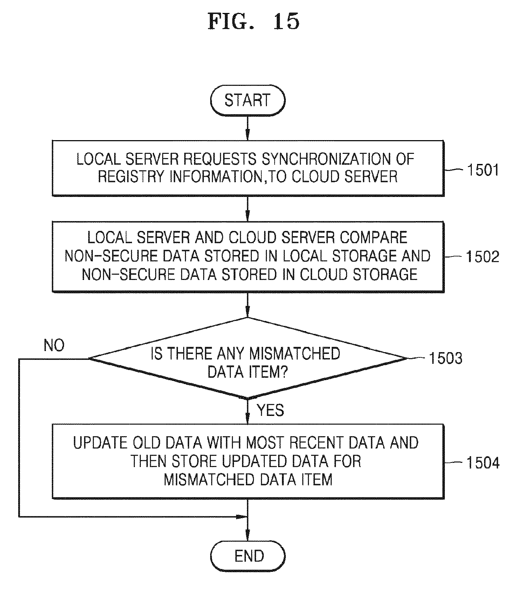

The registry information of the image forming apparatus registered to the cloud system is separately stored in the cloud system and the in-house network system. In doing so, when the data items are partially modified, the data stored in both systems may be mismatched with each other. Accordingly, a method of synchronizing registry information of the image forming apparatus registered to the cloud system is described with reference to FIGS. 14 and 15.

FIG. 14 illustrates a method of synchronizing registry information of an image forming apparatus registered to a cloud system according to an embodiment of the present disclosure.

Referring to FIG. 14, when the image forming apparatus 3300 is registered to the cloud system 2000, non-secure data 14100 is stored in the cloud storage 2200, entire registry information 14200 including both of the secure data and the non-secure data is stored in the local storage 3200.

In other words, the non-secure data, for example, a license, a model name, and an error state, is stored in both of the cloud storage 2200 and the local storage 3200. Accordingly, when the non-secure data items are partially modified, only any one of the cloud storage 2200 and the local storage 3200 may be updated.

In FIG. 14, when the manager 1000 of the cloud system 2000 modifies the license validation period from three years to four years, the non-secure data 14100 stored in the cloud storage 2200 is updated accordingly, but the entire registry information 14200 stored in the local storage 3200 need not be updated accordingly until synchronization is performed.

Also, when the error state of the image forming apparatus 3300 is changed from "Toner Low" to "Paper Jam", the entire registry information 14200 stored in the local storage 3200 is updated accordingly, but the non-secure data 14100 stored in the cloud storage 2200 need not be updated accordingly until synchronization is performed.

In order to clear mismatch of data and update registry information with recent data, the cloud server 2100 and the local server 3100 may be periodically synchronized. The cloud server 2100 or the local server 3100 may periodically request synchronization. Alternatively, the cloud server 2100 may request synchronization from the local server 3100 at the request of the manager 1000. In contrast, the local server 3100 may request synchronization from the cloud server 2100 at the request of the in-house user.

When there is a request of synchronization, the cloud server 2100 and the local server 3100 respectively extract the registry information stored in the cloud storage 2200 and the local storage 3200 and transmit the extracted registry information to a counterpart, and take the most recent data for the items of mismatched data, thereby updating the registry information.

In other words, in FIG. 14, the local server 3100 updates the license validation period among the entire registry information 14200 stored in the local storage 3200 from three years "3Y" to four years "4Y". Also, the cloud server 2100 updates the error state among the non-secure data 14100 stored in the cloud storage 2200 from "Toner Low" to "Paper Jam".

Accordingly, the cloud system 2000 and the in-house network system 3000 may maintain the registry information of the image forming apparatus 3300 respectively stored therein to be the most recent data value.

FIG. 15 is a flowchart of a method of synchronizing registry information of an image forming apparatus registered to a cloud system according to an embodiment of the present disclosure.

Referring to FIG. 15, in operation 1501, the local server requests the cloud server to synchronize the registry information of the image forming apparatus. The local server may periodically, or when there is a request of the in-house user, request synchronization from the cloud server. Alternatively, the cloud server may periodically, or when there is a request of the manager of the cloud system, request synchronization from the local server.

In operation 1502, each of the local server and the cloud server compares the non-secure data stored in the local storage and the non-secure data stored in the cloud storage. Since the secure data is stored only in the local storage and not in the cloud storage, synchronization is not needed.

In operation 1503, the local server and the cloud server determine whether there is a mismatch data item as a result of the comparison of the non-secure data. As a result of the determination, if there is a mismatched item, operation 1504 is performed in which old data is updated with the most recent data and then stored for the mismatched data item.

The various embodiments of the present disclosure can be written as computer programs and can be implemented in general-use digital computers that execute the programs using a non-transitory computer readable recording medium. Examples of the computer readable recording medium include magnetic storage media (e.g., read only memory (ROM), floppy disks, hard disks, etc.), optical recording media (e.g., compact disc (CD)-ROMs, or digital versatile discs (DVDs)), and a carrier wave such as transmission through the Internet.

As described above, according to the above various embodiments, since, among the registry information of the image forming apparatus, the secure data that the user does not want to be disclosed to the outside is stored only in the local storage of the in-house network system, data security may be strengthened.

It should be understood that various embodiments described herein should be considered in a descriptive sense only and not for purposes of limitation. Descriptions of features or aspects within each embodiment should typically be considered as available for other similar features or aspects in other various embodiments.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. A method of managing registry information of an image forming apparatus registered to a cloud printing system, the method comprising:
receiving, from a local server of an in-house network system of an entity, a request to register the image forming apparatus with non-secure data of the registry information of the image forming apparatus;
determining whether a license of the entity is valid; and
storing the received non-secure data in a cloud area and completing registration of the image forming apparatus when the license is determined to be valid.

2. The method of claim 1,
wherein the registry information comprises secure data and the non-secure data, and
wherein the secure data and the non-secure data each includes items that are set or modified by a user.

3. The method of claim 2, wherein, when the registration of the image forming apparatus is completed, only the secure data is stored in a local area of the in-house network system.

4. The method of any one of claims 1 to 3, further comprising:
receiving, from the local server, a request to search the image forming apparatus; and
transmitting the non-secure data stored in the cloud area to the local server.

5. The method of any one of claims 1 to 4, further comprising:
receiving, from the local server, a request to synchronize the registry information with the non-secure data;
updating the non-secure data stored in the cloud area by comparing the non-secure data stored in the cloud area with the non-secure data received from the local server; and
transmitting the updated non-secure data stored in the cloud area to the local server.

6. A method of managing registry information of an image forming apparatus registered to a cloud printing system, the method comprising:
receiving a request to register the image forming apparatus;
transmitting only non-secure data among the registry information of the image forming apparatus to a cloud server and requesting registration; and
storing the registry information in a local area when the cloud server permits the registration.

7. The method of claim 6,
wherein the registry information comprises secure data and the non-secure data, and
wherein the secure data and the non-secure data each includes items that are set or modified by a user.

8. The method of claim 7, wherein, in the storing of the registry information in the local area, only the secure data is stored in the local area.

9. The method of any one of claims 6 to 8, further comprising:
requesting the non-secure data stored in a cloud area from the cloud server and receiving the non-secure data, when a request to search for the image forming apparatus is received from a mobile terminal; and
combining the received non-secure data and the registry information stored in the local area and transmitting the combined data to the mobile terminal.

10. The method of any one of claims 6 to 9, further comprising:
transmitting the non-secure data among the registry information stored in the local area to the cloud server and requesting synchronization;
receiving the non-secure data stored in a cloud area from the cloud server; and
comparing the non-secure data received from the cloud server and the non-secure data stored in the local area and updating the non-secure data.

11. A cloud printing system comprising:
a cloud server communicating with a local server of an in-house network system of an entity; and
a cloud memory for storing data,
wherein the cloud server configured to
receive a request to register an image forming apparatus with non-secure data among registry information of the image forming apparatus from the local server,
determine whether a license of the entity is valid and,
store the received non-secure data in the cloud memory and complete registration of the image forming apparatus when the license of the entity is determined to be valid.

12. The system of claim 11,
wherein the registry information comprises secure data and the non-secure data, and
wherein the secure data and the non-secure data each includes items that are set or modified by a user.

13. The system of claim 12, wherein, when the registration of the image forming apparatus is completed, the local server of the in-house network system is further configured to store only the secure data in the local area of the in-house network system.

14. The system of any one of claims 11 to 13, wherein, when a request to search for the image forming apparatus is received from the local server, the cloud server is further configured to transmit the non-secure data stored in the cloud memory to the local server.

15. The system of any one of claims 11 to 14, wherein, when a request to synchronize the registry information with the non-secure data is received from the local server, the cloud server is further configured to:
compare the non-secure data stored in the cloud memory and the non-secure data received from the local server,
update the non-secure data stored in a cloud area when there is a mismatch, and
transmit the updated non-secure data stored in the cloud memory to the local server.
